# EUROPEAN PATENT SPECIFICATION

(11) **EP 0 395 715 B1**
(45) Date of publication and mention of the grant of the patent: **17.07.1996**
(21) Application number: 89901185.2
(22) Date of filing: 09.12.1988
(51) Int. Cl.: B67D 5/62

(54) **HOT MELT DISPENSER**
SPENDER FÜR SCHMELZBARE KLEBEMITTEL
DISTRIBUTEUR DE COLLE THERMOFUSIBLE

(30) Priority: 09.12.1987 US 130407
(43) Date of publication of application: 07.11.1990
(60) Divisional application: 95120210.0
(73) Proprietor: MAY COATING TECHNOLOGIES, INC., St. Paul, MN 55113 (US)
(72) Inventor: MAJKRZAK, Gerald, A., Minneapolis, MN 55418 (US)
(74) Representative: Ström, Tore
(86) International application number: US8804401
(87) International publication number: WO8905278

(56) References cited:
- SU-A- 0 684 079
- US-A- 3 270 901
- US-A- 4 018 468
- US-A- 4 262 825
- US-A- 4 623 279
- US-A- 4 641 764
- US-A- 4 717 809
- US-A- 4 724 983
- US-A- 4 771 920
- US-A- 4 790 455

## Description

### Technical Field of the Invention

The present invention relates generally to hot melt technology and more particularly to a dispensing system and a method for dispensing a solid unitary mass slug of hot melt from a container wherein said slug adheres to the inside surfaces of said container in its unheated condition, said container open at one end to permit said slug to slide freely out of said container when said slug is released therefrom by the lowering of the adhesion of said slug to the sides of said container, said dispenser comprising:
a hopper sized to receive said container,
melting means located in the bottom of said hopper for melting hot melt to a liquified pumpable condition;
support means for supporting said container in said hopper with said open end down and positioned above said melting means and so that said slug can slide freely out of said container and into contact with said melting means once said slug is released from said container;
means for pumping liquified hot melt from said hopper; and
auxiliary heating means for heating the walls of said container when it is supported in said hopper by said support means so that the adhesion of said slug to the inside surfaces of said container is lowered to cause said slug to be released from and slide out of said container as a solid unitary mass and into contact with said melting means and further to provide that at the time said slug is released from said container it retains nearly the same shape, dimensions and solid state it possessed in said unheated condition.

### Background of the Invention

Meltable materials, commonly called hot melts, find increasing use in industry for instance as temporary or permanent fusion adhesives or for coating substrates. Hot melts may be used to coat substrates to provide, for instance, a gas impermeable surface thereof or, for instance, for the production of adhesive tapes, adhesive foils, for self-sealing labels. Rot melts are also commonly used for such purposes as cementing shoe and leather parts to each other, to glue cardboards to each other, to glue the back of tee books to the remainder thereof, to glue parts of furniture to each other, as well as during other assembly and finishing operations.

The known hot melts are predominantly binary and tertiary mixtures of basic polymers, adhesive resins and waxes, softeners and fillers. Hot melts and adhesives are available in various piecemeal forms such as granulate, powder, slivers, pearls, strands, candles, and in bulk solid form such as blocks and slugs. These materials are prepared for use by liquifying them by heating in a liquifying apparatus and by pumping or otherwise conveying the liquified hot melt to an application head in application apparatus which applies the hot melt to the surfaces to be coated or adhesively joined.

There are two principal types of dispensing apparatus which are currently in use to liquify and dispense hot melt. A first type of apparatus, which can be termed a "hopper" dispenser, includes a hopper, a melter for liquifying hot melt deposited in the hopper, and a pump to pump the liquified material from the melter to the application head. This type of dispenser is typically used in low volume hot melt operations in which hot melt is fed to the melter in piecemeal type forms in quantities weighing ≈ 9,1 Kg (twenty lbs.) or less. These small quantities can be fed into the hopper simply by "pouring" the hot melt pieces from the container into the hopper.

The other type of dispensing apparatus is known as a drum unloader. A drum unloader liquifies and dispenses solid, unitary mass, slug form hot melt directly from a 208 dm³ (55-gallon) or (equivalent sized metric drum container) or from pail sized containers. A drum unloader generally comprises a hydraulically driven platen including a melting grid, a dispensing aperture in the platen and a pump to pump the hot melt from the aperture to the application. In operation, the platen is pressed into the open end of an upright drum or pail of hot melt and the hot melt is liquified by the melting grid and forced up and out of the dispensing aperture by the pressurizing force of the platen into the pump. Drum unloaders are typically used in larger volume operations due to the volume of hot melt needed in the operation and because hot melt is typically less expensive when purchased in solid slug form in drum quantities. In addition, certain hot melts are so viscious they cannot be pumped to the application without the aid of hydraulic pressure, and thus drum unloaders are uniquely qualified for dispensing hot melts of this type.

Drum unloaders do, however, suffer from several drawbacks. The most serious of these drawbacks is the rupturing of the drum containers during use, whereby extremely hot and dangerous hot melt is spewed from the ruptured drum. Such ruptures can occur either as the result of defects in the drum walls or as the result of equipment malfunction and/or operator error. In addition, drum unloaders tend to leave a measurable quantity of hot melt in the bottom of the drum which cannot be forced out by the platen due to unavoidable voids between the platen and the bottom of the drum. Extracting this residue from the drum is difficult and time consuming, and as such the residue is often discarded with the drum, resulting in undesirable losses. Drum unloaders also suffer from a problem called "burying the platen". This problem occurs when the seal between the platen and the side surface of the drum is broken so that hot melt flows up and over the platen, thus "burying" it in liquified hot melt. Extracting a buried platen from a hot melt drum is difficult, time consuming and often dangerous. Another drawback of a similar nature results from the need to remove the hot platen from the drum for changover to a new drum or at the end of the workshift. Hot, liquified hot melt often drips from the platen when it is lifted out of the drum exposing workers to the risk of a serious burn and creating a difficult mess in any event. Drum unloaders also require that the application process be stopped to switch drums resulting in undesirable process down time. Moreover, certain types of hot melt are classified as hazardous materials. If an emptied drum contains a significant quantity of such hazardous materials as they usually do, its disposal requires special, more expensive procedures than required for disposal of unhazardous waste.

In view of the many drawbacks to drum unloaders others have recognized it would be beneficial to provide a hopper-type melter system that could accommodate drum or pail quantities of slug form hot melt. The economies of purchasing hot melt in drum quantities and slug form are thus achieved while the disadvantages of drum unloaders are avoided. However, unloading a slug of hot melt from a drum or pail is very difficult because the viscosity amd stickiness of unheated hot melt makes it impossible to pour or slide out of the container.

At least two systems have been proposed to deal with the problem of unloading a container of slug form hot melt into a hopper. In U.S. Patent No. 4,505,669 to Rogers there is disclosed a hopper-type melter which contemplates loading the entire hot melt drum, including the container, into the hopper. To melt the hot melt out of the drum container, the Roger's device includes heating elements which project upwardly from the bottom of the hopper so that they extend into the lower end of the drum container positioned in the dispenser and make contact with the holt melt material held therein. These projections melt the hot melt sufficiently to cause it to flow downwardly to the bottom of the melter where additional heating elements are provided to liquify it sufficiently to be pumped to the application heads. While Rogers also indicates that hot melt may be placed in the hopper without its drum container as a solid unitary mass, it does not suggest a way to get the hot melt out of the container and into the hopper.

The system of Rogers has several drawbacks. The main problem results from leaving the drum container in the unit while the hot melt is dispensed. If the hot melt melts out of the drum faster than it is pumped out and dispensed it backs up in the space between the outside of the drum and the hopper. Removing the drum from the hopper when it is empty thus becomes extremely difficult, particularly if hot melt cools and congeals in the space between the hopper and drum. Moreover, when the drum is removed its outside is coated with hot melt, making it difficult to handle. Furthermore, it is possible that the backed-up liquified hot melt could get contaminated with paint or other foreign substances from the outside surface of the drum container, possibly altering its adhesive characteristics. Moreover, unless the heating elements of the Roger's device can supply sufficient heat to the "top" end of a drum being unloaded it is possible that a quantity of hot melt will remain stuck in the top end of the drum and fail to be melted out and released to the "bottom" of the drum for liquification by the heating elements. As said above, however, applying too much heat with the heating elements can cause unwanted back-up of the hot melt.

Another approach to dispensing drum quantities of hot melt from hopper-type dispensers has been provided by the Meltex Corporation of Peachtree City, Georgia (see EP-A-228 689). The Meltex approach utilizes a bulk hopper-type melter having a capacity sufficient to accommodate a 55-gallon (or equivalent metric size) drum of hot melt and a drum unloading device which tips up and lifts a drum over the melter for unloading. Once tipped up over the hopper the outside of the drum is radiated with infrared heaters mounted over the melter until the hot melt slug inside the drum releases from the container into the melter's hopper. To control the direction and rate of the slide of the slug into the hopper the Meltex unit includes a heated spike positioned across the diameter of the open end of the drum. The spike restrains the movement of the hot melt slug to the rate of melting of the spike through the slug. Thus, the Meltex system is somewhat elaborate in design and unwieldy to use. In addition, because the system involves suspending a large mass of semi-liquified not melt from a considerable height it is inherently dangerous.

The present invention, like the Rogers and Meltex devices, provides a hopper-type dispenser for use in dispensing drum quantities of slug form hot melt. The invention departs from the Meltex system. It provides means for unloading the contents of a hot melt drum into the hopper of the dispenser, as opposed to the Rogers' system which contemplates leaving the container in the melter while dispensing its contents. The present invention is, however, simpler in construction than the Meltex system, can empty the contents of hot melt drum into the hopper in less time than the Meltex system, and assures that the entire hot melt slug is safely deposited in its entirety in the hopper without risk of spilling or splashing.

### Summary of the Invention

The present invention provides a hopper-type hot melt dispenser for use in liquifying and dispensing drum or pail quantities of slug form hot melt. As a result of its unique combination of features, the invention provides for the safe, efficient and substantially complete emptying of slug form hot melt from a container into the dispenser's melter. According to the invention, the surface of the container is uniformly heated by means of band heaters located about the circumference of the hopper.

In order to avoid any obstructions for the free sliding of the mass of slug, the support means for the container includes suspension means attachable to the lower end of said container and means positioned at the top of said hopper for supporting said suspension means whereby, when said container is inverted, it is hung from said suspension means in said hopper

### Brief Description of the Drawings

Fig. 1 is a cutaway side view of the hot melt dispenser according to the present invention;
Fig. 2 is partially cutaway end view of the hot melt dispenser according to the present invention; and
Fig. 3 is perspective view of a drum being loaded into the hot melt dispenser according to the present invention.

### Detailed Description of the Invention

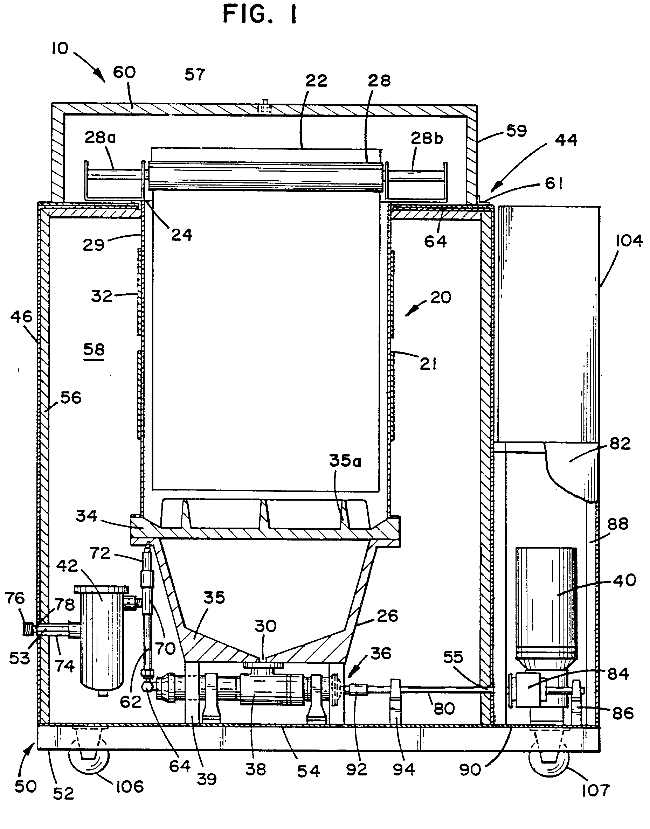

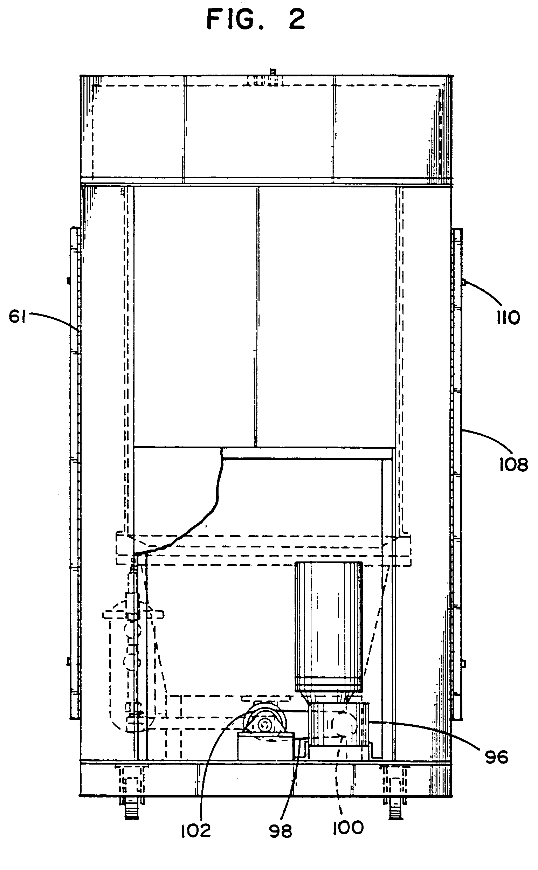

Referring now to Figures 1 and 2 of the drawing, there is shown a preferred embodiment of the hot melt dispenser 10 of the present invention. The dispenser housing 44 includes a shroud 46 disposed about substantially all of the housing's exterior surface, with the exception of the base 50. Base 50 includes a base frame 52 and a base plate 54 located on the interior surface thereof and two apertures 53 and 55 leading to the exterior of the housing. Insulation 56 is provided on the interior surface of the shroud 46. A melter 20 is supported inside housing 44 and includes a hopper 21 open at its upper end 24.

The hopper 21 is generally cylindrical in shape and is covered by a cylinder weldment 29. Below the hopper the melter 20 tapers down to an aperture 30 at its lower end 26, out of which liquified hot melt flows after heating. Band heaters 32 are disposed about the exterior circumferencial surface of the cylinder weldment 29. Cartridge heaters 34 are axially disposed in castings 35, which include a melting grid 35a of conventional design. Grid 35a provides liquifying heat to a hot melt mass resting thereon, whereafter it pools in the bottom of castings 35, which are heated sufficiently to maintain the liquified hot melt at the temperture required for pumping and use.

The dispenser housing 44 is covered by a hopper cover 60 having an inside surface 57 and an outside surface 59, and which is upwardly moveable by means of a continuous hinge 61 located on a line connecting the cover 60 with the housing 44. Cover 60 covers the hopper 20 as well as a large portion of the top of the housing 44. A shroud plate 64 covers that portion of the housing which would be exposed if the cover 60 were in upward (open) position.

A pump mechanism 36 is provided to pump hot melt from the melter 20 to a hot melt application device such as a nozzle. The pump mechanism 36 includes a pump 38 driven by a (type) motor 40 and a filter 42 for filtering the hot melt before it passes to the application device. The pump 38 is disposed beneath and connected to the aperture 30 in the melter 20, with the filter 42 and the motor 40 disposed on either side of the pump. Support legs 39 maintain the melter 20 in a position above the pump 38. Motor 40 is located outside the housing 44, while the pump and the filter are located inside the housing.

Filter 42 and pump 38 are connected by a first pipe 62 and a second pipe 63. The first pipe 62 extends in a substantially vertical position between the pump 38 and the filter 42 and is equipped with pipe fittings 64 and 70 and a safety relief valve 72. The pipe fitting 64 connects the second pipe 63 to the first pipe 62, while the pipe fitting 70 connects the first pipe 62 to the filter 42. The safety relief valve 72 is disposed at the upper end of the first pipe 62, and provides a mechanism for pressure release in the system, venting excess fluid pressure in the line. The second pipe 63 extends in a substantially horizontal position between the pump 38 and the first pipe 62, and is connected to the pump 38 by a coupling 65. As liquified hot melt flows out the aperture 30, it is pumped by the pump 38 through the second pipe 63 and the first pipe 62, then into the filter 42 where impurities in the mixture are filtered out. The filter 42 is connected to pipe 74 extending through the aperture 53 to connect with a heated hose 76 by means of a pipe fitting 78. The heated hose 76 provides a conduit by which the liquified hot melt is conveyed to a hot melt application device.

The pump 38 is driven by motor 40 through a shaft 80 passing through the aperture 55 in the melter housing 44. The shaft 80 is driven by the motor 40 through a mechanism consisting of a gearbox 96, a chain 98, a first sprocket 100 and a second sprocket 102. The first sprocket 100 resides in the gearbox 96 of the motor 40 and is rotated by gears within the gearbox 96. This action in turn drives the chain 98 which is connected to the pump 38 by the second sprocket 102, and thus creates a rotational force which drives the shaft 80. Pillow block bearings 90 are provided to stabilize shaft 80. The motor 40 is covered by a motor shroud 82, which also covers a torque limiter 84 and a bearing spacer 86. The torque limiter 84 provides a cap on the amount of torque generated by the motor 40 transmitted to the pump 38, such that the pump 38 will not be forced to work at a rate higher than that allowed by its mechanism. The bearing spacer 86 provides stability to the shaft 80 such that the shaft 80 cannot move in substantially other than a longitudinal direction. A panel mount 88 is present about the interior wall of the motor shroud 82, covering all but the bottom wall 90 of the area in which the motor is enclosed. This bottom wall 90 is covered, like the bottom wall of the housing 44, with the base plate 54 and the base frame 52.

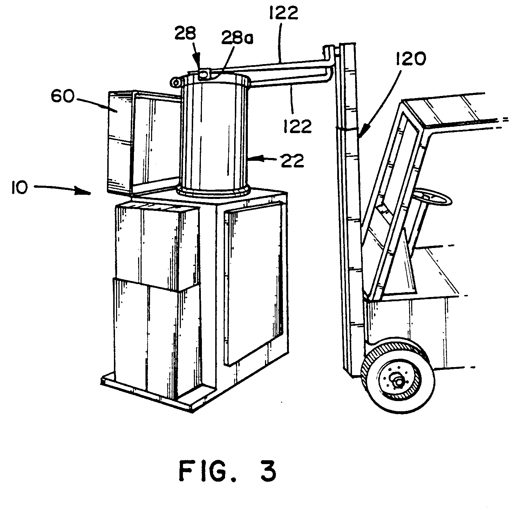

In Fig. 1, there is shown a hot melt containing drum 22 suspended for unloading of its hot melt slug content into hopper 21. Drum 22 has fastened around its circumference at one end a drum lifting ring 28 which includes fork lift "handles" 28a and 28b. Ring handles 28a and 28b rests on the top of hopper 21 to suspend the drum 22 for unloading. In Fig. 3, there is shown a perspective view of drum 22 being loaded into dispenser 10. As shown, during the loading process the cover 60 of housing 44 is opened so that drum 22 can be lowered into the position shown in Fig. 1 using a fork lift or other device that can lift and manuever the drum into place in the hopper. During the loading process the "bottom" or lower end of the drum is removed and the "top" or upper end vented either by removing it or by punching vent holes in it. As shown in Fig. 3, the forks 122 of fork lift 120 are inserted into handles 28a and 28b of ring 28 for lifting of drum 22. Once the drum is positioned in hopper 21, the fork lift is backed away and the cover 60 closed.

Band heaters 32 are then activated to heat the walls (and "bottom" if still in place) of the drum, so that the hot melt slug is released from the drum to slide down onto the top of melting grid 35a. Cover 60 is then reopened and the drum 22 is pulled out of the hopper 21, leaving the hot melt slug behind. Preferably, the drum is heated sufficiently so that hot melt residue on the sides of the drum flows out into the hopperalong with the slug. Once the drum is removed, cover 60 is reclosed and the dispenser is ready to be activated for melting and dispensing operation. In dispensing operation, cartridge heaters 34 in castings 35 are activated to liquify the hot melt deposited in the hopper 20 that it may be pumped to the application devices and used in a hot melt process. The hopper may be reloaded with another slug of hot melt prior to all of the liquified hot melt being dispensed so that continuous non-stop hot melt application is possible.

Based on the characteristics of currently available hot melts band heaters 32 are preferably of sufficient wattage to heat the walls of drum 22 to temperatures in the range of 121°C to 246°C (250 to 475 degrees Farenheit). It shall be understood, however, that the stated range is in no way essential to the invention. Rather, it is only the range presently contemplated to be of greatest utility given known hot melt materials which can be pumped from a hopper-type dispenser. In any event, the temperature to be used for any given hot melt material depends on its various characteristics, but is preferably selected so that the hot melt material is heated sufficiently to be released from the drum container within fifteen to twenty minutes after the band heaters are activated, and so that the hot melt slug is released from the drum before liquified hot melt fills the volume of space below the cartridge heaters and starts backing up around the sides of the drum. Characteristics which affect the rate of melting of a hot melt material from a container include the specific heat and heat of fusion of the hot melt, the filler materials used in the hot melt and the specific heat of the container and the thickness of its walls. Of course, there are various other factors of generally lesser impact that affect the rate of melting of a hot melt material.

In order to facilitate heat transfer to the drum and to encourage release of hot melt from the walls of the hopper they are preferably coated with a black teflon material such as Teflon S® (made by Dupont).

The hopper is sized to receive several different sizes of drums in the fifty five gallon range. For example, it will accommodate drums of 571,5 mm (22 1/2") and 596,9 mm (23 1/2") inside diameters as well as equivalently sized metric system drums. Moreover, the present invention may be used in connection with all presently known drum types, for instance fiber drums or metal drums. In the case of fiber drums, it is preferable to fasten the drum lifting ring to the end of the drum that is in contact with the floor during storage so that the hot melt settled therein provides rigidity to the drum walls to aid in obtaining a secure hold on the drum for lifting. The drum can then be pivoted about the fork handles into an "upside down" position for loading in the hopper.

The present invention may also be used to unload and dispense lesser quantities of slug-form hot melt contained in pails or other containers smaller than drums. Hot melt pails typically have an inside diameter of nineteen to twenty inches and hold five gallons of hot melt. To load a pail of hot melt into the hopper the bottom of the pail is vented, for example, by punching holes in it, and the pail is suspended upside down in the hopper with suitable suspension apparatus and unloaded in the same manner as a drum as described above. Moreover, the hopper 21 may be downsized so that it exclusively accommodates pail quantities of hot melt.

Thus, as described above the present invention provides a unique and advantageous form of hot melt dispenser for use in connection with containers of slug form hot melt. Only a simple and commonly available lifting and loading device such as a forklift is required for unloading a drum container into the dispenser. The process is safe and simple because the hot melt is safely contained in the container in its solid, unheated form until after the container is within the confines of the hopper. Thus, there is no chance that heated hot melt will be inadvertently spilled or splashed during unloading. Due to the high degree of uniformity in heating possible by virtue of the enclosed insulated environment and the placement of the auxillary heating units, the container is emptied relatively completely, leaving little residue remaining therein. Furthermore, the invention makes it possible to use cheaper, less rugged materials to make drum or pail containers because the containers do not have to be pressurized for unloading. The drums can also be made less expensive because there is less need to hold the tolerances required for proper sealing of the platen to the walls of the container as required for proper operation of a drum or pail unloader. Also, the present invention can be used to unload damaged containers not safe for use with an unloader, and can be used to dispense pellet form hot melt as well as slug form hot melt.

It is to be understood that even though numerous characteristics and advantages of the present invention have been set forth in the foregoing description, together with the details of the structure and function of the invention, the disclosure is illustrative only and changes may be made to the full extent indicated by the terms in which the appended claims are expressed.

## Claims

1. A dispensing system comprising a hot melt dispenser for dispensing a solid, unitary mass slug of hot melt from a container (22) wherein said slug adheres to the inside surfaces of said container in its unheated condition, said container (22) open at one end to permit said slug to slide freely out of said container when said slug is released there from by the lowering of the adhesion of said slug to the sides of said container, said dispenser (10) comprising:
a hopper (21) sized to receive said container (22),
melting means (34) located in the bottom of said hopper (21) for melting hot melt to a liquified pumpable condition;
support means (28,28a,b) for supporting said container (22) in said hopper (21) with said open end down and positioned above said melting means (34) and so that said slug can slide freely out of said container and into contact with said melting means (34) once said slug is released from said container;
means (36) for pumping liquified hot melt from said hopper; and
auxiliary heating means (32) for heating the walls of said container (22) when it is supported in said hopper (21) by said support means so that the adhesion of said slug to the inside surfaces of said container (22) is lowered to cause said slug to be released from and slide out of said container as a solid unitary mass and into contact with said melting means (34) and further to provide that at the time said slug is released from said container (22) it retains nearly the same shape, dimensions and solid state it possessed in said unheated condition, **characterized** by the following features
-a) the surface of the container is uniformly heated by means of band heaters (32) located about the circumference of the hopper
-b) in order to avoid any obstruction for the free sliding of the mass of slug, the support means (28) for the container includes suspension means (28a,28b) attachable to the lower end of said container and means positioned at the top of said hopper (21) for supporting said suspension means whereby, when said container is inverted, it is hung from said suspension means in said hopper

2. The dispenser according to claim 1 wherein said hopper (21) is contained in a housing (44) and wherein said housing includes insulation (56) for insulating said hopper.

3. The dispenser according to claim 1 or 2 further including a removable cover (60) for selectively covering said hopper (21), and further wherein said cover (60) is closed when said auxiliary heating means (32) is activated.

4. The dispenser according to claim 3 wherein said housing (44) includes a removable cover (60) for selectively covering said hopper (21), and further wherein said cover (60) is closed when said heating means (32) is activated.

5. The dispenser according to claim 1 wherein said heating means (32) includes a thermostat for controlling the heat generated thereby and further wherein said heat generation is selected to heat the walls of said container (22) when supported in said hopper (21) to a temperature sufficient to cause said slug to be released from said container (22) before hot melt melting off said slug fills the bottom of said hopper and backs up and around the outside of said container (22).

6. A dispenser according to claim 1 further wherein said support means (28,28a,b) includes suspension means attached to the upper end of said container (22) as it oriented supported in said hopper (21) and means positioned at the top of said hopper (21) for supporting said suspension means whereby said container (22) is hung from said suspension means in said hopper.

7. A dispenser according to claim 6 further wherein said suspension means comprises a drum lifting ring (28).

8. Apparatus according to claim 7 further wherein the handles (28a,28b) of said drum lifting ring (28) are positioned above and outside of said hopper (21) whereby they can be readily engaged for the purpose of lifting said container (22).

9. A dispenser according to claim 1 wherein said container (22) comprises a drum.

10. A dispenser according to claim 9 further wherein said drum (22) is a fiber drum.

11. A dispenser according to claim 9 further wherein said drum (22) is a metal drum.

12. A dispenser according to claim 1 further wherein the inside walls of said hopper (21) are coated with a black material whereby heat transfer from the walls of said hopper to said container (22) is encouraged.

13. A dispenser according to claim 1 further wherein said heating means (32) can heat the walls of said container (22) to a temperature insufficient to cause said slug to be released from said container (22) within approximately fifteen to twenty minutes of when said heating means (32) is activated.

14. A dispenser according to claim 1 further wherein said heating means (32) heats the walls of said container (22) to a temperature of at least 121°C (250°F).

15. A dispenser according to claim 1 wherein said melting means (34) includes a melting grid (35a) and wherein a volume of said hopper (21) is located below said melting grid (35a) so that when said slug is released from said container (22) it rests on top of said grid (35a) whereby said slug will not splash liquified hot melt in the volume of said hopper (21) underneath said grid (35a).

16. Apparatus according to claim 1 wherein the volume of said hopper (21) underneath said open end of said container (22) suspended in said hopper (21) is less than the volume of said slug.

17. Apparatus according to claim 1 or 16 further wherein the height of said hopper (21) above said melting means (34) is substantially equal to the length of said container (22) and further wherein said container is supported by said means for supporting (28,28a,b) substantially within said hopper (21).

18. Apparatus according to claim 1 further wherein said means (28) for supporting said container (22) supports said container with the upper end thereof above the top of said hopper (21) and further including means for enclosing the space above the top end of said container (22) so that heat from said auxiliary heating mean (32) is held in the enclosed space.

19. Apparatus according to claim 1 wherein said support means (28) supports said container (22) at a position in said hopper (21) so that when said slug is released it rests in said hopper with a portion of said slug remaining surrounded by but not adhered to said container (22).

20. A method for unloading a slug of solid, unitary mass hot melt from a container (22) into a hot melt dispenser hopper (21), said slug being retained inside said container by adhesion of said slug to the inside surfaces of said container in its unheated condition, said method comprising the steps of:
(a) opening one end of said container (22) to provide that once the adhesion of said slug to said container is sufficiently lowered to release said slug it can slid freely out of said container (22), and venting the other end of said container;
(b) in order to avoid any obstruction for the free sliding of the mass of slug, providing support means for the container including suspension means attachable to the lower end of said container and means positioned at the top of said hopper for supporting said suspension means whereby, when said container is inverted, it is hung from said suspension means in said hopper with the open end of said container down to permit said slug to slide freely out of said container (22) when it is released;
(c) uniformly heating the walls of said container (22) by means of band heaters located about the circumference of the hopper, to lower the adhesion of said hot melt slug to the inside surfaces of said container (22) so that said slug is released from said container as a solid unitary mass retaining nearly the same shape, dimensions and solid state as said slug possessed in said unheated condition; and
(d) removing said container (22) from said hopper after said slug is released so that said slug is deposited in said hopper (21) as a solid unitary mass.

21. The method according to claim 20 wherein said walls are heated at rate sufficient to release said slug from said container (22) before hot melt melted off the surface of said slug backs up in the bottom of said hopper (21) around the outside of said container.

22. The method according to claim 20 or 21 wherein said container (22) comprises a drum and further wherein said method includes the step of fastening a drum lifting ring (28) on said drum and lifting said drum into and out of said hopper (21) from said lifting ring (28).

23. A method according to claim 20 further wherein said container (22) comprises a drum.

24. A method according to claim 23 further wherein said drum (22) is a fiber drum.

25. A method according to claim 23 further wherein said drum (22) is a metal drum.

26. A method according to claim 20 further wherein the inside walls of said hopper are provided with a coating of a black non stick surface material such as TEFLON® to encourage heat transfer from the walls of said hopper (21) to said container (22).

27. A method according to claim 20 further wherein said method step of heating the walls of said container (22) is accomplished by heating the outside walls of said hopper (21) whereby heat is transferred through said hopper walls to said container.

28. A method according to claim 20 further wherein said container (22) is heated to cause hot melt residue adhered to its inside surfaces to melt sufficiently to flow out of said container (22) in approximately the same time taken for said slug to be released from said container so that said container is substantially clean of hot melt residue when said container is removed from said hopper (21).

29. A method according to claim 28 further wherein band heaters (32) are provided to heat the outside walls of said hopper (21).

30. A method according to claim 20 wherein the walls of said container (22) are heated sufficiently to cause said slug to be released from said container within approximately fifteen to twenty minutes of when said heating begins.

31. A method according to claim 20 further wherein said walls of said container (22) are heated to a temperature of at least 121°C (250°F).

32. A method according to claim 20 wherein the bottom of said hopper (21) is provided with melting means (34) including a melting grid (35a) and further wherein a volume of said hopper (21) is located below said melting grid (35a) so that when said slug is released from said container (22) it rests on top of said grid (35a) whereby said slug will not splash liquified hot melt in the volume of said hopper (21) underneath said grid (35a).

33. A method according to claim 32 further wherein said container (22) is supported in said step (b) over said melting grid (35a) so that when said slug is resting on top of said melting grid just after being released from said container a portion of it remains surrounded by but not adhered to said container (22).

34. A method according to claim 20 further wherein there is provided a housing (44) containing said hopper (21) and further wherein there is provided insulation (56) for insulating said housing (44).

35. A method according to claim 20 wherein the volume of said hopper (21) underneath said open end of said container (22) suspended in said hopper (21) is less than the volume of said slug.

36. A method according to claim 20 or 35 further wherein melting means is located in said hopper (21) and the height of said hopper (21) above said melting means (34) is substantially equal to the length of said container (22), and further wherein said container (22) is supported substantially within said hopper (21).

## Patentansprüche

1. Ein Spendesystem mit einem Spender für schmelzbare Klebemittel zum Verteilen eines festen Klumpens vorgegebener Masse eines heißen Klebstoffs aus einem Behälter (22), worin der Klumpen an den Innenflächen des Behälters in seinem unerhitzten Zustand anhaftet, der Behälter (22) an einem Ende offen ist, um es dem Klumpen zu gestatten, frei aus dem Behälter zu gleiten, wenn der Klumpen von ihm durch Verringerung der Haftung des Klumpens an den Seiten des Behälters gelöst wird, wobei der Spender (10) umfaßt:
einen Speisetrichter (21), der dimensioniert ist, um den Behälter (22) aufzunehmen,
Schmelzmittel (34), die in dem Boden des Speisetrichters (21) angeordnet sind, um ein schmelzbares Klebemittel in einen verflüssigten, pumpbaren Zustand zu schmelzen;
Trägermittel (28a,28b) um den Behälter (22) in dem Speisetrichter (21) mit dem offenen Ende unten liegend und oberhalb des Schmelzmittels (34) positioniert und so, daß der Klumpen aus dem Behälter frei heraus und in Kontakt mit dem Schmelzmittel (34) gleiten kann, wenn der Klumpen einmal von dem Behälter gelöst ist, zu tragen;
Mittel (36), um verflüssigtes, schmelzbares Klebemittel aus dem Speisetrichter zu pumpen; und
Hilfsheizmittel (32), um die Wände des Behälters (22), wenn er in dem Speisetrichter (21) durch die Trägermittel gehalten ist, zu erwärmen, so daß die Haftung des Klumpens an den Innenflächen des Behälters (22) verringert wird, damit der Klumpen von dem Behälter gelöst und als feste normierte Masse aus diesem heraus und in Kontakt mit dem Schmelzmittel (34) gleitet, und um sicherzustellen, daß der Klumpen zu dem Zeitpunkt, wenn er von dem Behälter (22) gelöst wird, nahezu die Form, die Abmessungen und den festen Zustand beibehält, den er in dem unerhitzten Zustand besaß, gekennzeichnet durch die folgenden Merkmale:
a) die Oberfläche des Behälters wird gleichförmig durch Bandheizvorrichtungen (32), die um den Umfang des Speisetrichters angeordnet sind, erhitzt;
b) um jedes Hindernis für das freie Gleiten der Masse zu vermeiden, umfaßt das Trägermittel (28) für den Behälter Hängemittel (28a,28b), die an dem unteren Ende des Behälters befestigbar sind, und Mittel, die an der Oberseite des Speisetrichters (21) positioniert sind, um das Hängemittel zu halten, wodurch der Behälter, wenn er umgedreht wird, von dem Hängemittel in diesen Speisetrichter hereinhängt.

2. Der Spender nach Anspruch 1, worin der Speisetrichter (21) in einem Gehäuse (44) enthalten ist und worin das Gehäuse eine Isolierung (56) zur Isolierung des Speisetrichters umfaßt.

3. Der Spender nach Anspruch 1 oder 2, mit weiterhin einer entfernbaren Abdeckung (60), um wahlweise den Speisetrichter (21) abzudecken, und worin weiter die Abdeckung (60) geschlossen ist, wenn das Hilfsheizmittel (32) aktiviert ist.

4. Der Spender nach Anspruch 3, worin das Gehäuse (44) eine entfernbare Abdeckung (60) umfaßt, um wahlweise den Speisetrichter (21) abzudecken, und worin weiterhin die Abdeckung (60) geschlossen ist, wenn das Heizmittel (32) aktiviert ist.

5. Der Spender nach Anspruch 1, worin das Heizmittel (32) einen Thermostat zur Steuerung der durch dieses erzeugten Wärme umfaßt, und worin weiterhin die Wärmeerzeugung gewählt wird, um die Wandungen des in dem Speisetrichter (21) gehaltenen Behälters (22) auf eine Temperatur zu erwärmen, die ausreichend ist, um zu bewirken, daß die Masse von dem Behälter (22) gelöst wird, bevor der schmelzbare Klebstoff, der von dem Klumpen schmilzt, den Boden des Speisetrichters füllt und sich um die Außenseite des Behälters (22) legt.

6. Ein Spender nach Anspruch 1, worin weiterhin das Trägermittel (28, 28a,b) ein an dem oberen Ende des Behälters (22), wenn dieser in dem Speisetrichter (21) gehalten ist, befestigtes Hängemittel und an dem oberen Ende des Speisetrichters (21) positionierte Mittel zum Tragen des Hängemittels umfaßt, wobei der Behälter (22) an dem Hängemittel in den Speisetrichter hineinhängt.

7. Ein Spender nach Anspruch 6, worin weiterhin das Hängemittel einen Trommelhebering (28) umfaßt.

8. Vorrichtung nach Anspruch 7, worin weiterhin die Handgriffe (28a,28b) des Trommelheberings (28) oberhalb und außerhalb von dem Speisetrichter (21) positioniert sind, wodurch sie zum Zwecke des Anhebens des Behälters (22) auf einfache Weise gegriffen werden können.

9. Ein Spender nach Anspruch 1, worin der Behälter (22) eine Trommel umfaßt.

10. Ein Spender nach Anspruch 9, worin weiterhin die Trommel (22) eine Fasertrommel ist.

11. Ein Spender nach Anspruch 9, worin weiterhin die Trommel (22) eine Metalltrommel ist.

12. Ein Spender nach Anspruch 1, worin weiterhin die Innenwände des Speisetrichters (21) mit einem schwarzen Material beschichtet sind, wodurch die Wärmeübertragung von den Wänden des Speisetrichters zu dem Behälter (22) erhöht wird.

13. Ein Spender nach Anspruch 1, worin weiterhin das Heizmittel (32) die Wände des Behälters (22) auf eine Temperatur erwärmen kann, die nicht ausreichend ist, um zu bewirken, daß der Klumpen von dem Behälter (22) innerhalb von 15 bis 20 Min., nachdem das Heizmittel (32) aktiviert wird, gelöst wird.

14. Ein Spender nach Anspruch 1, worin weiterhin das Heizmittel (32) die Wände des Behälters (22) auf eine Temperatur von wenigstens 121 °C (250 °F) erwärmt.

15. Ein Spender nach Anspruch 1, worin das Schmelzmittel (34) einen Schmelzrost (35) umfaßt und worin ein Volumen des Speisetrichters (21) unterhalb des Schmelzrostes (35a) angeordnet ist, so daß der Klumpen, wenn er von dem Behälter (22) gelöst wird, auf dem Rost (35a) liegt, wodurch der Klumpen den verflüssigten schmelzbaren Klebstoff in dem Volumen des Speisetrichters (21) unterhalb des Rostes (35a) nicht verspritzen wird.

16. Vorrichtung nach Anspruch 1, worin das Volumen des Speisetrichters (21) unterhalb des offenen Endes des Behälters (22), der in dem Speisetrichter (21) hängt, kleiner als das Volumen des Klumpens ist.

17. Vorrichtung nach Anspruch 1 oder 16, worin weiterhin die Höhe des Speisetrichters oberhalb des Schmelzmittels (34) im wesentlichen gleich der Länge des Behälters (22) ist, und worin weiterhin der Behälter durch das Trägermittel (28,28a,28b) im wesentlichen innerhalb des Speisetrichters (21) gehalten ist.

18. Eine Vorrichtung nach Anspruch 1, worin weiterhin das Mittel (28) zum Tragen des Behälters (22) den Behälter mit dessen oberem Ende oberhalb der Oberseite des Speisetrichters (21) hält, weiterhin Mittel vorgesehen sind, um den Raum oberhalb des oberen Endes des Behälters (22) zu schließen, so daß Wärme von dem Hilfsheizmittel (32) in dem geschlossenen Raum gehalten wird.

19. Vorrichtung nach Anspruch 1, worin das Trägermittel (28) den Behälter (22) an einer Position in dem Speisetrichter (21) hält, so daß der Klumpen, wenn er gelöst wird, in dem Speisetrichter bleibt, wobei ein Teil des verbleibenden Klumpens von dem Behälter (22) umgeben ist aber nicht an diesem haftet.

20. Ein Verfahren zum Entladen eines festen Klumpens vorgegebener Masse eines schmelzbaren Klebemittels aus einem Behälter (22) in einen Speisetrichter (21) eines Spenders für schmelzbare Klebemittel, wobei der Klumpen in seinem unerhitzten Zustand innerhalb des Behälters durch Haftung des Klumpens an den Innenflächen des Behälters gehalten wird, wobei das Verfahren die Schritte umfaßt:
a) daß ein Ende des Behälters (22) geöffnet wird, um sicherzustellen, daß der Klumpen, wenn seine Haftung an dem Behälter ausreichend verringert wird, um den Klumpen zu lösen, frei aus dem Behälter (22) gleiten kann, und das andere Ende des Behälters belüftet wird;
b) daß Trägermittel für den Behälter mit Hängemitteln, die an dem unteren Ende des Behälters befestigbar sind, und Mitteln, die an der Oberseite des Speisetrichters positioniert sind, um das Hängemittel zu tragen, vorgesehen sind, um jede Behinderung für ein freies Gleiten des Klumpens zu vermeiden, wodurch der Behälter, wenn er umgedreht wird, von dem Hängemittel in den Speisetrichter mit dem offenen Ende des Behälters unten liegend hineinhängt, um zu gestatten, daß der Klumpen, wenn er gelöst ist, frei aus dem Behälter (22) gleiten kann;
c) daß die Wände des Behälters (22) gleichförmig mittels Bandheizvorrichtungen, die um den Umfang des Speisetrichters angeordnet sind, erwärmt wird, um die Haftung des Klumpens schmelzbaren Klebemittels an den Innenflächen des Behälters (22) zu verringern, so daß der Klumpen von dem Behälter als eine feste normierte Masse, die nahezu die selbe Form, die selben Abmessungen und den festen Zustand, wie ihn der Klumpen in unerhitztem Zustand besaß, behält, gelöst wird; und
d) daß der Behälter (22) aus dem Speisetrichter entfernt wird, nachdem der Klumpen gelöst ist, so daß der Klumpen in dem Speisetrichter (21) als eine feste normierte Masse gelagert wird.

21. Das Verfahren nach Anspruch 20, worin die Wände mit einer Geschwindigkeit erwärmt werden, die ausreichend ist, um den Klumpen von dem Behälter (22) zu lösen, bevor schmelzbarer Klebstoff, der von der Oberfläche des Klumpens abgeschmolzen ist, sich in dem Boden des Speisetrichters (21) um die Außenseite des Behälters legt.

22. Das Verfahren nach Anspruch 20 oder 21, worin der Behälter (22) eine Trommel umfaßt und worin weiterhin das Verfahren den Schritt umfaßt, daß ein Trommelhebering (28) an der Trommel fixiert wird und die Trommel in den und aus dem Speisetrichter (21) von dem Hebering (28) gehoben wird.

23. Ein Verfahren nach Anspruch 20, worin weiterhin der Behälter (22) eine Trommel umfaßt.

24. Ein Verfahren nach Anspruch 23, worin weiterhin die Trommel eine Fasertrommel ist.

25. Ein Verfahren nach Anspruch 23, worin weiterhin die Trommel eine Metalltrommel ist.

26. Ein Verfahren nach Anspruch 20, worin weiterhin die Innenwände des Speisetrichters mit einer Beschichtung aus einem schwarzen, nicht haftendem Oberflächenmaterial wie beispielsweise Teflon^{(R)} beschichtet ist, um die Wärmeübertragung von den Wänden des Speisetrichters (21) an den Behälter (22) zu unterstützen.

27. Ein Verfahren nach Anspruch 20, worin weiterhin der Verfahrensschritt der Erhitzung der Wände des Behälters (22) verwirklicht wird, indem die Außenwände des Speisetrichters (21) erhitzt werden, wobei Wärme durch die Speisetrichterwände an den Behälter übertragen wird.

28. Ein Verfahren nach Anspruch 20, worin weiterhin der Behälter (22) erwärmt wird, um zu bewirken, daß Rückstände von schmelzbarem Klebemittel, die an seinen Innenflächen haften, ausreichend schmelzen, um aus dem Behälter (22) in der selben Zeit, die der Klumpen braucht, um von dem Behälter gelöst zu werden, herauszufließen, so daß der Behälter im wesentlichen sauber von Rückständen von schmelzbarem Klebemittel ist, wenn der Behälter aus dem Speisetrichter (21) entfernt wird.

29. Ein Verfahren nach Anspruch 28, worin weiterhin die Bandheizvorrichtungen (32) vorgesehen sind, um die Außenwände des Speisetrichters (21) zu erwärmen.

30. Ein Verfahren nach Anspruch 20, worin die Wände des Behälters (22) ausreichend erwärmt werden, um zu bewirken, daß die Masse von dem Behälter innerhalb von 15 bis 20 Minuten von dem Beginn des Heizens an gelöst wird.

31. Ein Verfahren nach Anspruch 20, worin weiterhin die Wände des Behälters (22) auf eine Temperatur von wenigstens 121 °C (250 °F) erhitzt werden.

32. Ein Verfahren nach Anspruch 20, worin der Boden des Speisetrichters (21) mit einem Schmelzmittel (34) mit einem Schmelzrost (35a) versehen ist und worin weiterhin ein Volumen des Speisetrichters (21) unterhalb des Schmelzrostes (35a) plaziert ist, so daß der Klumpen, wenn er von dem Behälter (22) gelöst wird, auf dem Rost (35a) liegt, wodurch der Klumpen das verflüssigte schmelzbare Klebemittel in dem Volumen des Speisetrichters (21) unterhalb des Rostes (35a) nicht verspritzen wird.

33. Ein Verfahren nach Anspruch 32, worin weiterhin der Behälter (22) in dem Schritt (b) oberhalb des Schmelzrostes (35a) gehalten wird, so daß, wenn der Klumpen auf dem Schmelzrost liegt, direkt nachdem er von dem Behälter gelöst worden ist, ein Teil von ihm von dem Behälter (22) umgeben ist aber nicht an diesem haftet.

34. Ein Verfahren nach Anspruch 20, worin weiterhin ein Gehäuse (44) vorgesehen ist, das den Speisetrichter (21) enthält, und worin weiterhin eine Isolierung (56) zur Isolierung des Gehäuses (44) vorgesehen ist.

35. Ein Verfahren nach Anspruch 20, worin das Volumen des Speisetrichters (21) unterhalb des offenen Endes des Behälters (22), der in den Speisetrichter (21) hineinhängt, kleiner als das Volumen der Masse ist.

36. Ein Verfahren nach Anspruch 20 oder 35, worin weiterhin ein Schmelzmittel in dem Speisetrichter (21) angeordnet ist und die Höhe des Speisetrichters (21) oberhalb des Schmelzmittels (34) im wesentlichen gleich der Länge des Behälters (22) ist, und worin weiterhin der Behälter (22) im wesentlichen innerhalb des Speisetrichters (21) gehalten ist.

## Revendications

1. Système de distribution comprenant un distributeur de matière thermofusible pour distribuer un bouchon massif, de masse monobloc, de matière thermofusible à partir d'un récipient (22), dans lequel ledit bouchon adhère aux surfaces intérieures dudit récipient, dans son état non chauffé, ledit récipient (22) s'ouvre au niveau d'une extrémité pour permettre audit bouchon de glisser librement hors dudit récipient, lorsque ledit bouchon en est libéré par l'abaissement de l'adhérence dudit bouchon sur les faces dudit récipient, ledit distributeur (10) comprenant :
une trémie (21) dimensionnée pour recevoir ledit récipient (22),
un moyen de fusion (34) situé au fond de ladite trémie (21) pour faire fondre de la matière thermofusible à un état liquéfié pompable;
des moyens de support (28, 28a, b) pour supporter ledit récipient (22) dans l adite trémie (21), ladite extrémité ouverte étant orientée vers le bas et disposée au-dessus dudit moyen de fusion (34) et de manière que ledit bouchon puisse glisser librement hors dudit récipient et venir au contact dudit moyen de fusion (34), une fois que ledit bouchon est libéré dudit récipient;
un moyen (36) pour pomper la matière thermofusible liquéfiée depuis ladite trémie; et
un moyen de chauffage (32) auxiliaire pour chauffer les parois dudit récipient (22), lorsqu'il est supporté dans ladite trémie (21) par ledit moyen de support, de manière que l'adhérence dudit bouchon aux surfaces intérieures dudit récipient (22) soit réduite pour forcer ledit bouchon à être libéré de et à glisser hors dudit récipient, sous la forme d'une masse monobloc et pour venir au contact dudit moyen de fusion (34) et pour permettre en outre, en même temps que ledit bouchon est libéré dudit récipient (22), qu'il conserve pratiquement les mêmes forme, dimensions et état massif qu'il possédait audit état non chauffé, caractérisé en ce que :
a) la surface du récipient est chauffée uniformément au moyen d'organes de chauffage en bande (32) situés autour de la circonférence de la trémie,
b) en vue d'éviter toute obstruction du glissement libre de la masse de bouchon, le moyen de support (28) prévu pour le récipient comprend un moyen de suspension (28a, 28b) pouvant être fixé à l'extrémité inférieure dudit récipient et un moyen disposé au sommet de ladite trémie (21), pour supporter ledit moyen de suspension de manière que, lorsque ledit récipient est retourné, il soit accroché audit moyen de suspension dans ladite trémie.

2. Distributeur selon la revendication 1, dans lequel ladite trémie (21) est contenue dans un boîtier (44) et lequel ledit boîtier comprend une isolation (56) pour isoler ladite trémie.

3. Distributeur selon la revendication 1 ou 2, comprenant en outre un couvercle (60) amovible pour recouvrir sélectivement ladite trémie (21) et dans lequel , en outre, ledit couvercle (60) est fermé lorsque ledit moyen de chauffage (32) auxiliaire est activé.

4. Distributeur selon la revendication 3, dans lequel ledit boîtier (44) comprend un couvercle (60) amovible pour recouvrir sélectivement ladite trémie (21) et dans lequel, en outre, ledit couvercle (60) est fermé lorsque ledit moyen de chauffage (32) est activé.

5. Distributeur selon la revendication 1, dans lequel ledit moyen de chauffage (32) comprend un thermostat pour contrôler la chaleur produite de ce fait et dans lequel, en outre, ladite production de chaleur est sélectionnée pour chauffer les parois dudit récipient (22), lorsqu'il est monté dans ladite trémie (21), à une température suffisante pour forcer ledit bouchon à être libéré dudit récipient (22) avant que la fusion dudit bouchon de matière thermofusible provoque le remplissage du fond de ladite trémie et revienne vers le haut et autour de la partie extérieure dudit récipient (22).

6. Distributeur selon la revendication 1, dans lequel en outre ledit moyen de support (28, 28a, b) comprend un moyen de suspension fixé à l'extrémité supérieure dudit récipient (22), lorsqu'il est orienté de manière à être monté dans ladite trémie (21) et un moyen disposé au sommet de ladite trémie (21), pour supporter ledit moyen de suspension de manière que ledit récipient (22) soit accroché audit moyen de suspension, dans ladite trémie.

7. Distributeur selon la revendication 6, dans lequel en outre ledit moyen de suspension comprend un anneau de levage de bidon (28).

8. Appareil selon la revendication 7, dans lequel, en outre, les poignées (28a, 28b) dudit anneau de levage de bidon (28) sont disposées au-dessus et à l'extérieur de ladite trémie (21), de manière qu'elles puissent être facilement engagées en vue de lever ledit récipient (22).

9. Distributeur selon la revendication 1, dans lequel ledit récipient (22) comprend un bidon.

10. Distributeur selon la revendication 9, dans lequel en outre ledit bidon (22) est un bidon de fibres.

11. Distributeur selon la revendication 9, dans lequel en outre ledit bidon (22) est un bidon métallique.

12. Distributeur sel on la revendication 1, dans lequel en outre les parois intérieures de ladite trémie (21) sont recouvertes d'un matériau noir de manière à favoriser le transfert de chaleur depuis les parois de ladite trémie vers ledit récipient (22).

13. Distributeur selon la revendication 1, dans lequel en outre ledit moyen de chauffage (32) peut chauffer les parois dudit récipient (22) à une température cependant insuffisante pour permettre la désolidarisation dudit bouchon vis-à-vis dudit récipient (22) en à peu près quinze à vingt minutes, lorsque ledit moyen de chauffage (32) est activé.

14. Distributeur selon la revendication 1, dans lequel en outre ledit moyen de chauffage (32) chauffe les parois dudit récipient (22) à une température d'au moins 121 °C (250 °F).

15. Distributeur selon la revendication 1, dans lequel ledit moyen de fusion (34) comprend une grille de fusion (35a) et dans lequel un volume de ladite trémie (21) est situé au-dessous de ladite grille de fusion (35a), de manière que, lorsque ledit bouchon est libéré dudit récipient (22), il repose au sommet de ladite grille (35a), afin que ledit bouchon ne provoque pas d'éclaboussures de matière thermofusible liquéfiée dans le volume de ladite trémie (21) se trouvant au-dessous de ladite grille (35a).

16. Appareil selon la revendication 1, dans lequel le volume de ladite trémie (21) au-dessous de ladite extrémité ouverte dudit récipient (22), suspendu dans l adite trémie (21), est inférieur au volume dudit bouchon.

17. Appareil selon la revendication 1 ou 16, dans lequel en outre la hauteur de ladite trémie (21) au-dessus dudit moyen de fusion (34) est sensiblement égale à la longueur dudit récipient (22) et dans lequel en outre ledit récipient est supporté par ledit moyen de support (28, 28a, b), sensiblement dans ladite trémie (21).

18. Appareil selon la revendication 1, dans lequel en outre ledit moyen (28) prévu pour supporter ledit récipient (22) supporte ledit récipient, tandis que son extrémité supérieure se trouve au-dessus du sommet de ladite trémie (21), et comprenant en outre un moyen pour fermer l'espace situé au-dessus de l'extrémité supérieure dudit récipient (22), de manière que la chaleur provenant dudit moyen de chauffage (32) auxiliaire soit maintenue dans l'espace fermé.

19. Appareil selon la revendication 1, dans lequel ledit moyen de support (28) supporte ledit récipient (22) en une position donnée dans ladite trémie (21) de manière que, lorsque ledit bouchon est libéré, il repose dans ladite trémie tandis qu'une partie dudit bouchon reste entourée par, mais n'adhère pas audit récipient (22).

20. Procédé pour décharger un bouchon de matière thermofusible massive, de masse monobloc, à partir d'un récipient (22) dans une trémie de distributeur de matière thermofusible (21), ledit bouchon étant maintenu dans ledit récipient par adhérence dudit bouchon aux surfaces intérieures dudit récipient, dans son état nord chauffé, ledit procédé comprenant les étapes consistant à :
(a) ouvrir une extrémité dudit récipient (22) pour permettre que, une fois que l'adhérence dudit bouchon audit récipient est suffisamment réduite pour libérer ledit bouchon, il puisse glisser librement hors dudit récipient (22), et mise à l'évent de l'autre extrémité dudit récipient;
(b) en vue d'éviter toute obstruction du glissement libre de la masse de bouchon, agencer un moyen de support pour le récipient comprenant un moyen de suspension pouvant être fixé à l'extrémité inférieure dudit récipient et un moyen disposé au sommet de ladite trémie pour supporter ledit moyen de suspension de manière que, lorsque ledit récipient est retourné, il soit accroché audit moyen de suspension dans ladite trémie, tandis que l'extrémité ouverte dudit récipient est orientée vers le bas pour permettre audit bouchon de glisser librement hors dudit récipient (22), lorsqu'il est libéré;
(c) chauffer uniformément les parois dudit récipient (22) au moyen d'organes de chauffage en bande situés autour de la circonférence de la trémie pour réduire l'adhérence dudit bouchon de matière thermofusible aux surfaces intérieures dudit récipient (22), de manière que ledit bouchon soit libéré dudit récipient sous la forme d'une masse monobloc conservant pratiquement les mêmes forme dimensions et état solide que ceux que ledit bouchon possédait dans ledit état non chauffé; et
(d) enlèver ledit récipient (22) depuis ladite trémie, après que ledit bouchon ait été libéré, de manière que ledit bouchon soit déposé dans ladite trémie (21) sous la forme d'une masse monobloc.

21. Procédé selon la revendication 20, dans lequel lesdites parois sont chauffées à une valeur suffisante pour libérer ledit bouchon vis-à-vis dudit récipient (22), avant que la fusion de la surface dudit bouchon de matière thermofusible provoque le retour vers le haut au fond de ladite trémie (21), autour de la partie extérieure dudit récipient.

22. Procédé selon la revendication 20 ou 21, dans lequel ledit récipient (22) comprend un bidon et dans lequel en outre ledit procédé comprend l'étape de fixation d'un anneau de levage de bidon (28) audit bidon et le levage dudit bidon, pour entrer dans et sortir de ladite trémie (21), depuis ledit anneau de levage (28).

23. Procédé selon la revendication 20, dans lequel en outre ledit récipient (22) comprend un bidon.

24. Procédé selon la revendication 23, dans lequel en outre ledit bidon (22) est un bidon en fibres.

25. Procédé selon la revendication 23, dans lequel en outre ledit bidon (22) est un bidon métallique.

26. Procédé selon la revendication 20, dans lequel en outre les parois intérieures de ladite trémie sont pourvues d'un revêtement de surface noire non adhérente, tel que du Téflon^{......}, pour favoriser le transfert de chaleur depuis les parois de ladite trémie (21) vers ledit récipient (22).

27. Procédé selon la revendication 20, dans lequel en outre ladite étape de procédé de chauffage des parois dudit récipient (22) est effectuée par un chauffage des parois extérieures de ladite trémie (21), de manière que la chaleur soit transférée via lesdites parois de trémie audit récipient.

28. Procédé selon la revendication 20, dans lequel en outre ledit récipient (22) est chauffé pour forcer les résidus de matière thermofusible adhérant à ses surfaces intérieures à fondre suffisamment pour s'écouler hors dudit récipient (22), à peu près selon la même durée que celle nécessaire audit bouchon pour être libéré dudit récipient, de manière que ledit récipient soit pratiquement exempt de résidu de matière thermofusible, lorsque ledit récipient est retiré de ladite trémie (21).

29. Procédé selon la revendication 28, dans lequel en outre des organes de chauffage en bande (32) sont destinés à chauffer les parois extérieures de ladite trémie (21).

30. Procédé selon la revendication 20, dans lequel les parois dudit récipient (22) sont chauffées suffisamment pour forcer ledit bouchon à être libéré dudit récipient, en à peu près quinze à vingt minutes, lorsque ledit chauffage commence.

31. Procédé selon la revendication 20, dans lequel en outre lesdites parois dudit récipient (22) sont chauffées à une température d'au moins 121 °C (250 °F).

32. Procédé selon la revendication 20, dans lequel le fond de ladite trémie (21) est pourvu d'un moyen de fusion (34) comprenant une grille de fusion (35a) et dans lequel en outre un volume de ladite trémie (21) est situé au-dessous de ladite grille de fusion (35a), de manière que, lorsque ledit bouchon est libéré dudit récipient (22), il repose au sommet de ladite grille (35a) de manière que ledit bouchon ne provoque pas d'éclaboussures de matière thermofusible liquéfiée dans le volume de ladite trémie (21) se trouvant au-dessous de ladite grille (35a).

33. Procédé selon la revendication 32, dans lequel en outre ledit récipient (22) est monté lors de ladite étape (b) au-dessus de ladite grille de fusion (35a), de manière que, lorsque ledit bouchon repose au sommet de ladite grille de fusion, juste avant d'être libéré dudit récipient, une partie de ce bouchon reste entourée par ledit récipient (22), mais n'y adhère pas.

34. Procédé selon la revendication 20, dans lequel en outre est prévu un boîtier (44) contenant ladite trémie (21) et dans lequel en outre est prévue une isolation (56) pour isoler ledit boîtier (44).

35. Procédé selon la revendication 20, dans lequel le volume de ladite trémie (21) au-dessous de ladite extrémité ouverte dudit récipient (22) suspendu dans ladite trémie (21) est inférieur au volume dudit bouchon.

36. Procédé selon la revendication 20 ou 35, dans lequel en outre un moyen de fusion est situé dans ladite trémie (21) et la hauteur de ladite trémie (21) au-dessus dudit moyen de fusion (34) est sensiblement égale à la longueur dudit récipient (22) et dans lequel en outre ledit récipient (22) est monté essentiellement dans ladite trémie (21).
